# EUROPEAN PATENT APPLICATION

(11) **EP 2 996 070 A1**
(43) Date of publication of application: **16.03.2016**
(21) Application number: 14306391.5
(22) Date of filing: 10.09.2014
(51) Int. Cl.: G06Q 10/02, G06Q 30/02, G06F 11/36, G06F 9/44, G06Q 50/14

(54) **System for updating a server database of a centralised mid-back office system with travel data**

(71) Applicant: Amadeus S.A.S., 06410 Biot (FR)
(72) Inventor: Rous, Luc, 2530 Boechout (BE)
(74) Representative: Gevers Patents

(57) **Abstract**

The present invention relates to a system (10) comprising a first processing unit (18) arranged for receiving a remotely generated input data file (14) comprising travel data (15) comprising travel reservation data (15b) and travel fare data (15a) related to the travel reservation. The first processing unit (18) comprising a fare interpretation processing module (16) arranged for selecting, based on the travel reservation data (15b), at least one rule for processing the travel fare data (15a) from a database of rules (21), and based on the selected rule determine from the travel fare data (15a) the corresponding travel fare values associated with the fare data fields of the server database, which values are communicated to the first processing unit (18) where they are grouped together with the remaining travel data (15) for updating each of the server database fields.

## Description

### Technical field

The present invention relates to a system for updating a server database. More specifically, it relates to a system for updating a server database of a centralised mid-back office system for travel agencies with travel data received from a remotely generated input data file.

### Background art

Updating a server database of a centralised system is usually performed by receiving through a computer network a remotely generated input data file comprising a number of values. The input data file may then be processed by a processing unit so as to extract the values corresponding to predetermined server database fields. Once the values have been extracted, the processing unit updates the server database fields with the corresponding values, which may later be used in a number of ways, e.g. provide product inventory reports or for keeping a list of records up to date depending on the function of the centralised system.

In the context of updating a server database of a centralised mid-back office system for travel agencies, an input data file comprising travel data may be received each time a travel reservation is booked. For example, a travel agent may create an input data file for assisting a customer with a travel reservation request. For example, the input data file may be a Passenger Number Record (PNR) which is a record in the database of a computer reservation system (CRS) that may contain the itinerary for a passenger, or a group of passengers travelling together, amongst other information. Once the travel reservation has been booked, the input data file containing travel data is finalised and transmitted to the centralised mid-back office system where it is processed by a processing unit so as to extract the travel data associated with predetermined fields of the server database and accordingly update each of the server database fields with the corresponding travel data. The travel data of the input data file may comprise data related to the travel reservation, which corresponds to travel data fields of the server database, and travel fare data corresponding to travel fare data fields of the server database. For example, the travel reservation data of the input data file may comprise travel related information such as the passenger name, transportation carrier, pricing code, exchange ticket code and corporate affiliation program code. On the other hand, the travel fare data may comprise fare information of the travel reservation such as the published fare of the travel reservation, the sales price that the reservation was sold to the customer, the purchase travel reservation price that the travel agency has to pay to the provider, the travel fare commission code determining the commission rate on the travel reservation, etc.

Given the number of different values provided with regards to the travel fare data, the processing unit of the centralised travel reservation system may be required to interpret the travel fare data of the input data file so as to correctly extract the travel fare values corresponding to the travel fare data fields of the server database. The interpretation of the travel fare data is performed by providing in the source code of the processing unit a set of pre-programmed instructions or rules, which dictate the way the travel fare data is to be interpreted by the processing unit. These pre-programmed instructions are hard coded in the main source code of the processing unit, thus any change requires a complete software testing of the source code to ensure correct functionality. Based on this set of pre-programmed instructions or rules, the travel fares values are extracted and together with the travel reservation values are used for updating the server database data fields. The values held in the server database data fields may then be used by the travel agency or other parties for issuing invoices to the customer, determining the correct price to be paid to the provider of the travel reservation, receiving sales commission from the supplier, and for accounting and reconciliation purposes.

However, a problem exists in that the interpretation requirements of the travel fare data for each of the input data file received may differ greatly from one another. As a result, travel fare data exceptions may be formed that require specific interpretation instructions or rules, which may deviate from the pre-programmed instructions that are hard coded in the source code of the processing unit. The travel fare data exceptions may arise due to a number of different reasons such as the travel market requirements, conditions imposed by the transportation carrier, customer affiliation discount programs, and so on. Therefore, in the case where the pre-programmed instructions do not include specific instructions or rules dealing with the travel fare data exception of the input data file, the travel fare data may be incorrectly processed by the processing unit. As a result, the processing unit would wrongly interpret the travel fare data of the input data file, leading to the update of the fare data fields of the server database with wrong values, which will result in the issuance of incorrect invoices to the customers, wrong reconciliation of accounting data, incorrect payment to the provider of the travel reservation, wrongly calculated sales commission, and so on. The wrong interpretation of the travel fare data is usually discovered at a much later stage, which may have significant financial consequences for all the parties involved in the travel reservation transactions, such as the travel agent, the customer, the supplier and the travel reservation management company. Once the interpretation problem is discovered, the user of the input data file may raise an issue flag to the centralised mid-back office system for the resolution of the interpretation problem. However, resolving an interpretation problem requires changing or updating the hard coded pre-programmed instruction, which may be performed by modifying the generic source code of the processing unit. Every time a modification is made to the source code of the processing unit, a complete software testing needs to be performed to guarantee that the functionality of the processing unit has not been affected by any of the changes made to the pre-programmed instructions. Furthermore, since the mid-back office system is a generic system used by many users, a change to the hard coded pre-programmed instructions, although it may resolve an interpretation problem raised by one user, might affect the operation of the system for another user. As a result, completely resolving a single interpretation problem arising from the travel fare data contained in a single input data file may take a considerable amount of time, so as to ensure that none of the users using the mid-back office have been affected by the change to the hard-coded pre-programmed instructions. Considering the size of the travel market worldwide, a significant amount of interpretation resolution requests may be generated every single date. Since each interpretation problem may be different from one another there is no standard way of resolving each interpretation resolution request in an easy and quick manner. Instead, each interpretation resolution request needs to be manually resolved by a team of developers, while ensuring through software testing that the functionality of the processing unit has not been affected by any changes made to the source code. Therefore, with the systems and methods available in the prior art, resolving an interpretation resolution request may require a significant amount of time and effort. At the same time, with each modification made to the generic source code the risk of causing a malfunction of the processing unit significantly increases.

### Disclosure of the invention

It is an aim of the present invention to provide a system and a method for enabling the processing of an input data file comprising travel fare data exceptions in an easy and quick manner without the need for modifying the generic source code of the processing unit.

This aim is achieved according to the invention with the system showing the technical characteristics of the characterising part of the first claim.

More in particular according to a first aspect of the present invention a system for updating a server database of a centralised mid-back office system for travel agencies with travel data is provided.

According to embodiments of the present invention, the system may comprise a first processing unit, which is in direct communication with a database server over a wireless or wired computer communication network. The first processing unit may be arranged for receiving via a computer communication network a remotely generated input data file. The input data file may comprise, among other data, travel reservation data and travel fare data related to the travel reservation. For example, the travel reservation data may include travel related information such as, passenger name, travel itinerary, transportation carrier, etc, while the fare data may include fare related information such as the price of the travel reservation, the amount that the travel agent has to be pay to the supplier, the sales commission to be paid to the travel agent for the booking of the reservation, etc. The first processing unit is arranged for processing the input data file so as to extract the travel data associated with predetermined fields of the server database and accordingly update each of the server database fields with the corresponding travel values extracted from the travel data. For example, the database fields may comprise travel reservation data fields for containing travel reservation values and travel fare data fields for containing travel fare values. The travel reservation data fields and travel fare data fields of the database corresponding respectively to the travel reservation data and travel fare data of the input data file. According to embodiments of the present invention, the first processing unit comprises a fare interpretation processing module, which is arranged for selecting, based on the travel data, at least one rule for processing the travel fare data from a database of rules. Based on the selected rule, the fare interpretation processing module is arranged to determine from the travel fare data the corresponding travel fare values associated with the travel fare data fields of the server database. The travel fare values determined by the fare interpretation processing module are communicated to the first processing unit where they are grouped together with the remaining travel data for updating each of the server database fields.

It has been found that the use of a dedicated fare interpretation processing module for processing the travel fare data of the input file has the advantage that the rules or instructions to be applied to the travel fare data do not have to be pre-programmed into the source code of the first processing unit. As a result, changes to the rules for handling travel fare data exceptions may be performed locally in the fare interpretation processing module in an easy and quick manner by simple updating the database of rules. Therefore, the system of the present invention allows for the interpretation problems identified to be resolved in significantly less amount of time without the need for changing the hard coded, generic, source code of the first processing unit. Furthermore, the use of a fare interpretation processing module may enable each user connected to the centralised mid-back office system to have different settings with regards to the rules to be applied to the travel fare data. As a result, each user may specify independently the rules to be applied to the travel fare data without the risk for affecting other user connected to the same centralised mid-back office system.

According to embodiments of the present invention, the rules to be applied by the fare interpretation processing module to the travel fare data may comprise a set of pre-defined type rules for handling travel fare data with standard interpretation requirements and a set of exception type rules for handling travel fare data exceptions. The separation of rules into standard and exception type rules may alleviate the need for updating the complete set of rules each time an interpretation problem is identified. Instead, only a predetermined part of the rules database arranged for holding the exception type rules may be update with a new set of exception type rules for handling the interpretation problem identified. In this way, the time and effort required for updating the exception type rules may be significantly reduced leading to a less complicated system for resolving an interpretation problem, which can be operated by a user with little or no knowledge of computer software programming.

According to embodiments of the present invention, the exception type rules may be arranged so that they are dynamically triggered by the information contained in the travel reservation data. As a result, in the case where the travel fare data constitutes an exception case, the fare interpretation engine is arranged to identify the travel fare data with exception requirements and automatically select from a rules database, based on the travel reservation data, the correct exception type rule to be applied to travel fare data without the intervention of an operator. Therefore, the fare interpretation processing module for each input data file received can automatically identify and handle travel fare data with exception requirements and based on the exception type rule determine the correct travel fare values associated with the travel fare data fields of the server database. The correct travel fare values may then be sent to the first processing unit where they are grouped with the remaining travel reservation data for updating the server database fields. As a result, by automatically handling travel fare data with exception requirements it is further ensured that the database fields are always updated with the correct values, thereby significantly reducing the number of interpretation problem arising due to the incorrect interpretation of the travel fare data of the input data file.

According to embodiments of the present invention, the exception type rule or the exception type rules to be applied to the travel fare data may be selected based on the priority settings given to the information contained in the travel reservation data. For example, from the travel reservation data, the information related to the exchange of the ticket may be assigned a higher priority than the customer affiliation program. As such, if the exchange ticket code information is present in the travel reservation data, a corresponding exception type rule may be dynamically applied to the travel fare data by the fare interpretation processing module. In the case where the exchange ticket code is not present in the travel reservation data, the fare interpretation processing module based on the priority settings may sequentially go through the selected travel reservation information until an exception type rule is found. The selection and prioritisation of information from the travel reservation data may be used for creating unique combinations of exception type rules to be applied to the travel fare data. For example, for a specific travel market where specific rules apply to the exchange of a ticket, the information regarding the exchange tickets may be considered to be of a higher priority in comparison to the information related the corporate code of the customer. As a result, by changing the priority settings of the information contained in the travel reservation data one can enable the fare interpretation processing module to process travel fare data with specific exception requirements without the need for changing portions of fare interpretation processing module source code.

According to embodiments of the present invention, the priority settings of the information contained in the travel reservation data may be defined through a graphical user interface (GUI). As a result, the priority setting may be easily changed by the user of the system through the GUI interface and without the need for changing the source code of the fare interpretation processing module. For example, the priority setting may be modified by changing the value of each of the fields provided using a computer keyboard to type the corresponding value or by simple rearranging the fields using a computer mouse for performing drag and drop actions.

According to embodiments of the present invention, the fare interpretation processing module may comprise an interpretation engine arranged for processing the travel fare data so as to determine the type of the rule, standard or exception type rule, to be applied to the travel fare data. The use of an interpretation engine ensures that the travel fare data may be quickly analysed without a manual intervention by the operator of the system.

According to embodiments of the present invention, the fare interpretation engine is arranged to determine the type of the rule to be applied to the travel fare data based on the ratio between the travel fare amounts present in the travel fare data of the input data file. Since the number of travel fare amounts present in the travel fare data of the input data file is not standardised, each input data file may be provided with a different number of travel fare data amounts. For example, the travel fare data may comprise at least one travel fare amount. In another example, the travel fare data may comprise two or three or more travel fare amounts, which may all be different. The use of a ratio as a criterion for determining the type of a rule applying to the travel fare data enables the fare interpretation engine to quickly analyse the travel fare data without using complicated formulas, thereby significantly reducing the processing power required for analysing the travel fare data and simplifying the fare interpretation engine architecture.

According to embodiments of the present invention, the fare interpretation processing module may further comprise an exception type rule interpretation engine arranged for determining based on the travel reservation data whether an exception type rule applies to the travel fare data. As a result, exception type rules can be applied without the need for a manual intervention by the operator of the system. As previously discussed the exception type rules may be based on the priority settings of the selected information from the travel reservation data.

According to embodiments of the present invention, the exception type rule interpretation engine may further be arranged for issuing an alert signal indicating that a new set of rules is required for processing the travel fare data. For example, an alert signal may be issued in the case where the fare interpretation engine indicated that the travel fare data should be processed with an exception type rule but the exception type rule interpretation engine is unable to find a corresponding exception type rule based on the information contained in the travel reservation data. As a result, with the use of an alert signal the risk for the server database fields being incorrectly updated with the wrong travel fare is significantly reduced since the operator of the system is always aware whether a corresponding rule has been found or not by monitoring whether an alert signal has been issued or not. Once alerted the user may add a new set of rules in the rules database and process again the travel fare data. The database of rules may be part of the fare interpretation processing module or in direct communication with the fare interpretation processing module.

According to embodiments of the present invention, the fare interpretation processing module may further comprise a calculation engine for determining from the travel fare data the corresponding travel fare values associated with the fare data fields of the server database based on the rule selected by the interpretation engine and the exception type rule interpretation engine. Once calculated, the values are communicated to the first processing unit where they are grouped with the remaining travel data so that the server database fields are updated. As a result, with the use of the system of the present invention the risk of incorrectly updating the server database fields is significantly reduced.

According to a second aspect of the present invention, a method for updating a server database with travel data is provided.

According to embodiments of the present invention, the method may comprise the step of firstly receiving a remotely generated input data file via a computer network by a first processing unit provided in direct communication with a database of a server. The input data file may comprise travel data comprising travel reservation data related to a travel reservation, and travel fare data related to the travel reservation. The input data file may then be processed by means of a first processing unit so as to extract the travel data associated with predetermined fields of the server database. The database fields may then be updated by means of the first processing unit updating each of the server database fields with the corresponding travel data, wherein the database fields comprise travel reservation data fields for containing travel reservation values and travel fare data fields for containing travel fare values. According to embodiments of the present invention the step of processing the input data file comprises the step of selecting, based on the travel data, by means of a fare interpretation processing module, which is part of the first processing unit, at least one rule for processing the travel fare data from a database of rules, and based on the selected rule determining from the travel fare data the corresponding travel fare values associated with the fare data fields of the server database, which values are communicated to the first processing unit where they are grouped together with the remaining travel data for updating each of the server database fields.

According to embodiments of the present invention, the step of processing the travel fare data for determining the travel fare values is performed locally by the fare interpretation processing module

### Brief description of the drawings

The invention will be further elucidated by means of the following description and the appended figures.
Figure 1 shows an exemplified implementation of centralised mid-back office system for travel agencies according to embodiments of the present invention.
Figure 2 shows a system for updating a server database with travel data according to embodiments of the present invention.
Figure 3 shows an exemplified implementation of the fare interpretation processing module according to embodiments of the present invention.
Figures 4 and 5 show an example of changing the priority setting of the travel reservation data via the GUI of the fare interpretation processing module.
Figure 6 shows the architecture of the fare interpretation processing module according to embodiments of the present invention.
Figure 7 shows an example of the operation of the system of the present invention using the Amadeus Agency Manager (AGM) mid-back office system.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

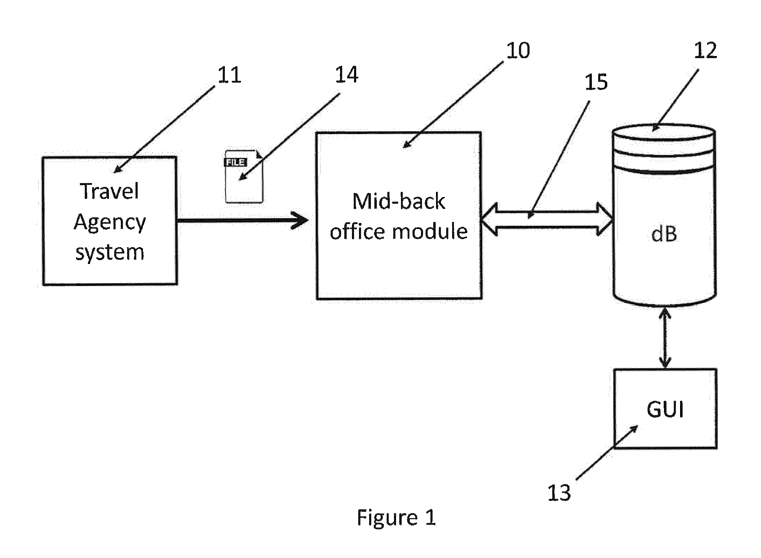

The present invention will now be described with references to the examples shown in Figures 1 to 7.

Figure 1 shows an exemplified implementation of a centralised mid-back office system for travel agencies according to embodiments of the present invention. The centralised mid-back office system may comprise a mid-back office module 10, which may be provided in direct communication with a Travel Agency (TA) system 11 and a server database 12. The mid-back office module may be arranged for receiving input data files 14 from the Travel Agency (TA) system 11 containing travel data 15, which may be processed so as to extract travel data associated with predetermined fields of the server database 12. Once the required travel data has been extracted, the server database fields may be updated with the corresponding travel values, which may be used later by the travel agency or other parties for issuing invoices to the customer, determining the correct price to be paid to the provider of the travel reservation, receiving sales commission from the supplier, and for accounting and reconciliation purposes. For this purpose a Graphic User Interface (GUI) 13 may be provided so as to allow the travel agent or other parties to access the values stored in the server database 12.

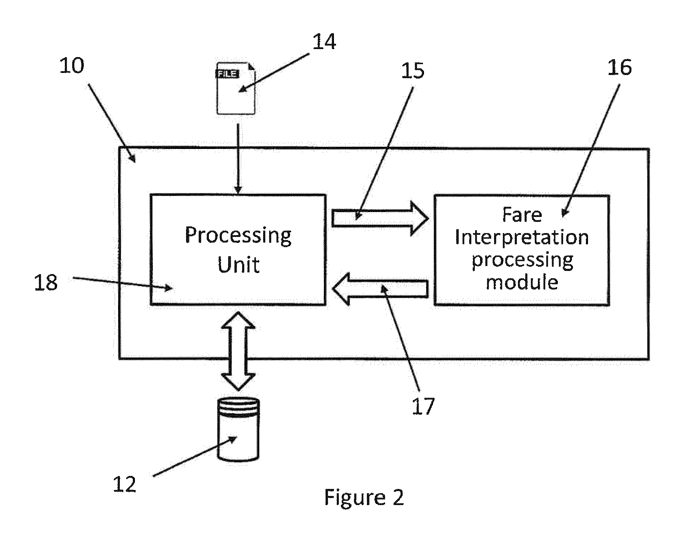

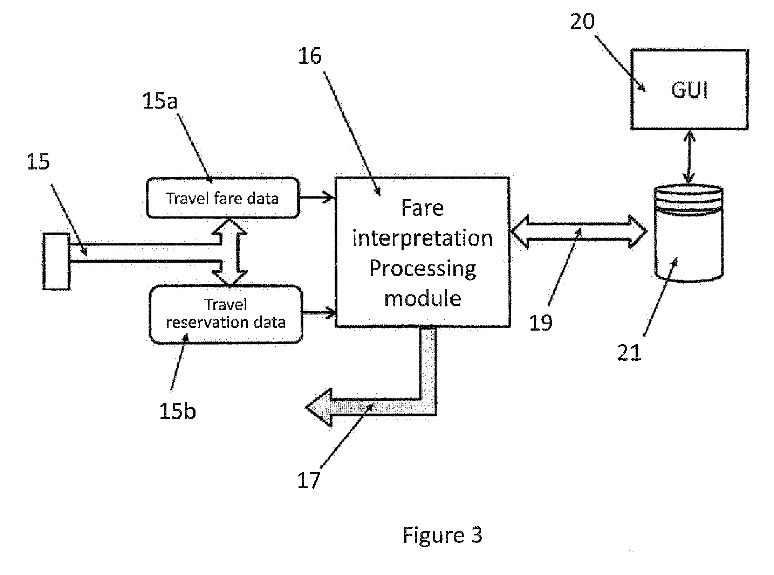

According to embodiments of the present invention, the mid-back office module 10 may be provided with a first processing unit 18 arranged for receiving and processing the travel data 15 of the input data file 14, as shown in figures 2 and 3. The travel data 15 of the input data file 14 may comprise travel reservation data 15b related to the travel reservation, which corresponds to travel reservation data fields of the server database, and travel fare data 15a corresponding to travel fare data fields of the server database. For example, the travel reservation data 15b of the input data file 14 may comprise travel related information such as the passenger name, transportation carrier, pricing code, exchange ticket code, corporate affiliation program code, travel reservation issue ID, the tour code, the payment indicator, and so on. On the other hand, the travel fare data 15a may comprise fare information of the travel reservation such as the published fare of the travel reservation, the sales price that the reservation was sold to the customer, the travel reservation price that the travel agency has to pay to the provider, the travel fare commission code determining the commission rate on the travel reservation, and so on. With regards to the travel fare data 15a, each of the input data files 14 received may be provided with a different number of fares arranged on respective lines, each indicating a different fare amount. In order to overcome the problems of the prior art with regards to the incorrect interpretation of the different amounts mentioned in the travel fare data 15a. The first processing unit 18 may be provided with a fare interpretation processing module 16 arranged for selecting, based on the travel reservation data 15b, at least one rule 19 for processing the travel fare data 15a from a database of rules 21, as shown in Figure 3. Based on the selected rule or rules 19, the fare interpretation processing module 16 is arranged for processing the travel fare data 15a so as to determine the corresponding travel fare values 17 associated with the travel fare data fields of the server database 12. The travel fare values 17 determined by the fare interpretation processing module 16 may then be communicated to the first processing unit 18 where they may be grouped together with the remaining travel reservation data 15b for updating each of the server database fields. The use of the fare interpretation processing module 16 may have as an advantage that the rules 19 to be applied do not have to be pre-programmed into the source code of the first processing module 18, as it is the case with the systems of the prior art. As a result, any changes to the rules 19 for handling the travel fare data 15a exceptions may be performed locally in the fare interpretation processing module 16 by updating the rules database 21. Therefore, the system of the present invention allows for the interpretation problems identified to be resolved in significantly less amount of time without the need for changing the generic source code of the first processing unit 18. Furthermore, the use of a fare interpretation processing module 16 may enable each user connected to the centralised mid-back office system 10 to have different settings with regards to the rules 19 to be applied to the travel fare data 15a. As a result, each user may specify independently the rules 19 to be applied to the travel fare data 15a without the risk for affecting the operation of other users connected to the same centralised mid-back office system 16.

According to embodiments of the present invention the rules 19 in the database of rules 21 may be separated into standard type rules for handling travel fare data 15a with standard interpretation requirements and exception type rules for handling travel fare data 15a with exception requirements. For example, the standard rules may comprise a set of rules that are applied across the travel industry. On the other hand, the exception type rules may comprise a set of rules that are applied only in certain cases and based on selected criteria such as the travel market, transportation carrier, etc. It has been found that dividing the rules 19 to be applied to the travel fare data 15a into standard and exception type rules, may significantly reduce the time and effort required for updating the database of rule 21, since in the case where a new exception type rule is needed only the relevant database section may be updated. As a result, the downtime of the centralised mid-back office system 10 during a rule or rules update may be significantly reduced, leading to the faster resolution of an interpretation problem without the need for complete software testing of the source code of the first processing unit 18. Moreover, since the exception type rules can be updated without the need for a change to the hard coded source code of the fare interpretation processing module, the system 10 may be operated by a user with little or no knowledge of computer software programming.

According to embodiments of the present invention, the exception type rules may be arranged so that they are dynamically triggered by the information 25, 26, 27, 28 contained in the travel reservation data 15b. As a result, in the case where the travel fare data constitutes an exception case, the fare interpretation engine 16 is arranged to identify the travel fare data 15a with exception requirements and automatically select from a rules database 21, based on the travel reservation data 15b, the correct exception type rule to be applied to travel fare data 15a without the intervention of an operator. Therefore, the fare interpretation processing module 16 for each input data file received may automatically identify the rule to be applied for handling travel fare data 15a with exception requirements based on an exception type rule selected from the rules database 21, which is used to determine the correct travel fare values 17 associated with the travel fare data fields of the server database 12.

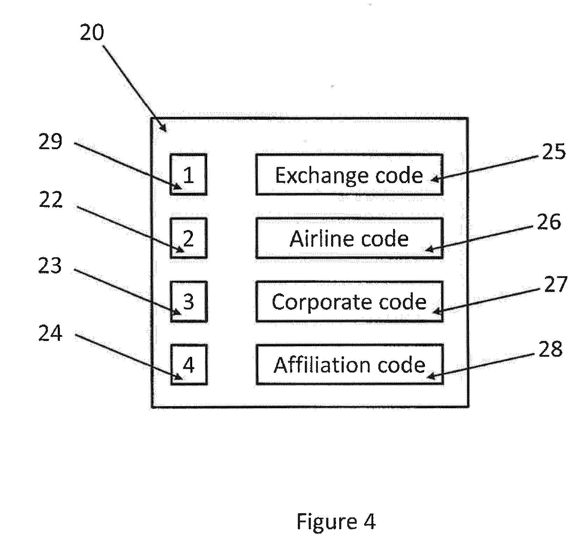

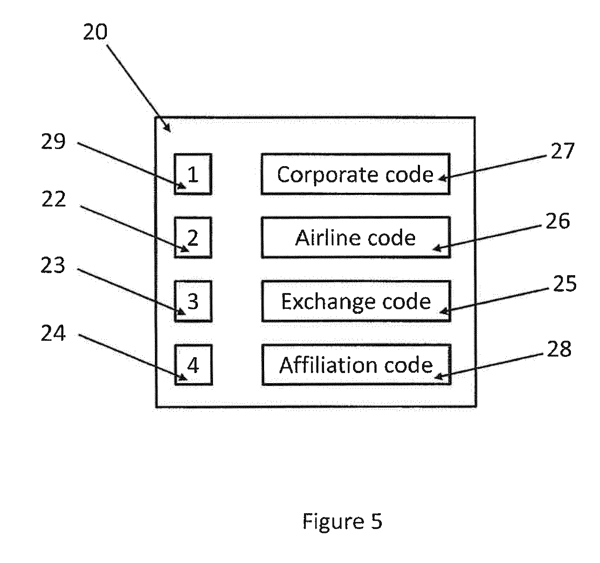

According to embodiments of the present invention, the exception type rule or exception type rules to be applied to the travel fare data 15a may be selected based on priority settings 22, 23, 24, 29 given to the information 25, 26, 27, 28 contained in the travel reservation data 15b. As shown in figures 4 and 5, the priority settings 22, 23, 24, 29 of the information 25, 26, 27, 28 contained in the travel reservation data 15b may be quickly changed via a Graphic User Interface 20, thereby enabling the user to create unique combinations of exception type rules to be applied to the travel fare data 15a. For example, the priority setting 22, 23, 24, 29 may be modified by changing the order of the information 25, 26, 27, 28 contained in each of the GUI 20 fields using a keyboard or by simple rearranging the information 25, 26, 27, 28 fields using a computer mouse. For example, for a specific travel market the information regarding the exchange code 25 of the airline ticket may be considered to be of a higher priority in comparison to the information related to the corporate code 27 of the customer, as shown in figure 4. As a result, if the exchange ticket code information 25 is present in the travel reservation data 15b, a corresponding exception type rule may be dynamically applied to the travel fare data 15a by the fare interpretation processing module 16. Otherwise, the fare interpretation processing module 16 based on the priority settings 22, 23, 24, 29 may sequentially go through the selected travel reservation information 25, 26, 27, 28 until an exception type rule is found. In another example, the corporate code 27 of the customer may be considered to be of a higher priority than the airline code 26 or the exchange ticket code 25, as shown in figure 5. It should be noted that other information of the travel reservation data 15b may be selected to dynamically trigger an exception type rule.

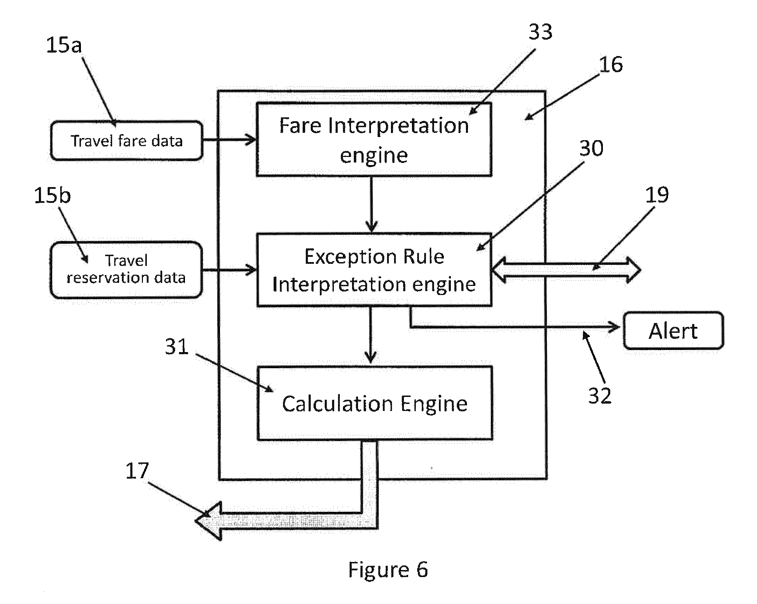

Figure 6 shows an exemplified implementation of the fare interpretation processing module 16 according to embodiments of the present invention. The fare interpretation processing module 16 may be provided with a fare interpretation engine 33, which is arranged for receiving the travel fare data 15a, and determine based on the information provided therein the type of the rule 19, standard rule or exception type rule, to be applied to the travel fare data 15a. The use of a fare interpretation engine 33 ensures that the travel fare data may be quickly analysed to determine whether it constitutes an exception or a standard case and based on this information select a corresponding rule without a manual intervention by the operator of the system. For example, the fare interpretation engine 33 may be arranged to determine the type of rule 19 to be applied to the travel fare data 15a based on the ratio between the travel fare amounts present in the travel fare data 15a of the input data file 14. Each input data file 14 may be provided with different number of travel fare amounts. For example, the travel fare data 15a may comprise at least one, at least two, at least three or more travel fare amounts, which may all be different from one another. It has been found that using the ratio between the different fare amounts mentioned in the travel fare data 15a as a criterion for determining the type of rule 19 to be applied to the travel fare data 15a may significantly reduce the time and effort required by the fare interpretation engine to determine whether the travel fare data 15a constitutes an exception or a standard case. As a result, the fare interpretation engine 33 may quickly analyse the travel fare data 15a without using complicated mathematical formulas or other type of information, thereby significantly reducing the architecture complexity of the fare interpretation engine 33 and the processing power required thereof.

According to embodiments of the present invention, the fare interpretation processing module 16 may further comprise an exception type rule interpretation engine 30, which is in direct communication with the fare interpretation engine 33. The exception type rule interpretation engine 30 may be arranged for receiving the results from the fare interpretation engine 33 and determine based on the travel reservation data 15b whether an exception type rule applies to the travel fare data 15a. As a result, exception type rules may be applied to the travel fare data 15a without manual intervention by the operator of the system. As previously discussed the exception type rules applied may be based on the priority settings 22, 23, 24, 29 of the selected information 25, 26, 27, 28 contained in the travel reservation data.

As shown in figure 6, the exception type rule interpretation engine 30 may further be arranged for issuing an alert signal 32 to indicate that a rule 19 for processing the travel fare data 15a has not been found and that a new set of rules needs to be determined in the rules database 21. For example, an alert signal 32 may be issued in the case where the fare interpretation engine 33 indicated that the travel fare data 15a should be processed with an exception type rule but the exception type rule interpretation engine 30 is unable to find a corresponding exception type rule based on the travel reservation data 15a. As a result, with the use of an alert signal 32 the risk for the server database fields being incorrectly updated with the wrong travel fare is significantly reduced, since the operator of the system is always informed by the system whether the travel fare data have been correctly processed or not by monitoring whether an alert signal 32 has been issued or not by the exception type rule interpretation engine 30. Once alerted the user may add a new set of rules 19 in the rules database 21 and process again the travel fare data 15a. The database of rules 21 may be part of the fare interpretation processing module 16 or in direct communication with the fare interpretation processing module 16 via a communication network.

According to embodiments of the present invention, the fare interpretation processing module 16 may further comprise a calculation engine 31 arranged for applying, preferably one rule, which is selected by the fare interpretation engine 33 and exception type rule interpretation engine 30 and calculate based on the selected rule the travel fare values 17 corresponding to the travel fare data fields of the server database 12. Once calculated the travel fare values 17 are communicated to the first processing unit 18 where they are grouped with the remaining travel data 15b for updating the server database fields. As a result, with the system of the present invention the risk of incorrectly updating the server database fields may be significantly reduced.

It should be noted that the system according embodiments of the present invention may be implemented in a single processor unit of a computer system. The system of the present invention may be further implemented as a computer program product which can be loaded into a processing unit of a computer system. Furthermore, each feature of the system may be implemented in separate computer systems, which may be located in different locations, each communicating with one another via a computer communication network, which can be either wired or wirelessly implemented.

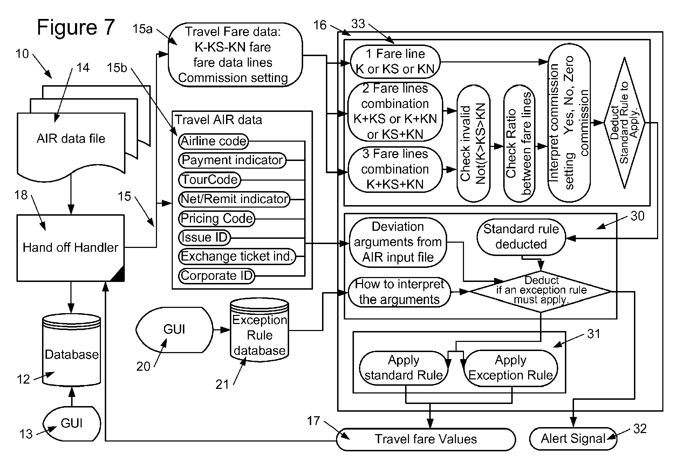

The operation of the system for updating the server database 12 of a centralised mid-back office system for agencies may be exemplified using the Amadeus Agency Manager (AGM) mid-back office system 10, the centralised mid-back office system 10, as shown in Figure 7. The AGM 10 system may comprise a Hand off Handler (HoH) 18, the first processing unit 18, arranged for receiving a remotely generated Amadeus Interface Record (AIR) file 14, the input data file 14, which comprises travel data 15 related to a travel reservation. The travel data 15, as previously explained, may comprise travel fare data 15a and travel AIR data 15b, the travel reservation data 15b, related to the travel reservation. The travel fare data 15a may be provided with a number of different fare data lines, each corresponding to a different fare amount. For example, the actual price of the travel reservation may be denoted by the letter "K", the sales price of the travel reservation paid by the customer may be denoted with the letters "KS", and the purchase price of the travel reservation to be paid by the travel agent may be denoted with the letters "KN". The travel fare data 15a may further comprise a fare data line related to the sales commission and how it should be calculated. For example, the fare data line related to the commission may indicate that no commission is to be calculated or that the commission should be zero or that the sales commission should be calculated based on predetermined percentage, e.g 5%. On the other hand, the travel AIR data 15b may comprise information related to the travel reservation such as the Airline code, the payment indicator, the tour code, net/remit ticket code, pricing code, etc. The AGM system 10 may further comprise a fare interpretation processing module 16, which is in direct communication with the HoH module 18. The fare interpretation processing module 16 may be arranged to receive by means of a fare interpretation engine 33 the travel fare data 15a and based on the number of fare data lines detected determine whether a standard or an exception type rule applies to the travel fare data 15a. For example, in the case where the travel fare data 15a comprises only one fare data line e.g K, KS or KN, the fare interpretation engine 33 may then proceed the interpretation of the commission information so as to determine whether a commission should be applied and at what rate, followed by the step of determining whether a standard rule should be deducted. However, in the case where travel fare data 15a comprises two or more fare data lines, then the fare interpretation engine 33 may first check whether the amounts mentioned in each fare data line comply with predetermined criteria, such as that K>KS>KN, before checking the ratio between the fare data lines, interpreting the commission settings and finally determining whether a standard rule should be applied. In the case that the predetermined criteria are not met, then the fare interpretation engine 33 automatically determines that the travel fare data 15a should be processed with an exception type rule.

An exception type rule interpretation engine 30 may further be provided for processing the output of the fare interpretation engine 33. The exception type rule interpretation engine 30 may be arranged for processing the travel fare data 15a and based on selected information from the travel AIR data 15b apply an exception type rule from a rule database 21. As previously discussed, priority settings may be applied to the information of the travel AIR data 15b via a GUI 20 interface. The exception type rule interpretation engine 30 may be arranged for processing the travel fare data 15a irrespective of whether the fare interpretation engine 33 has determined or not that a standard rule should apply. Furthermore, the exception type rule interpretation engine 30 may be further arranged to issue an alert signal 32 in the case where a corresponding rule for processing the travel fare data 15a is not found.

The fare interpretation processing module 16 may further comprise a calculation engine 31 arranged, based on the rule selected by the fare interpretation engine 33 and the exception type rule interpretation engine 30, to determine the travel fare values 17 corresponding to the travel fare data fields of the server database 21. The travel fare values 17 may be communicated to the HoH 18 where they are grouped together with the remaining travel AIR data 15b for updating the corresponding travel data fields of the server database 21. The values stored in the server database 21 may then be accessed via Graphic User Interface (GUI) 13 by the travel agent or other parties involved in the travel reservation for issuing invoices, accounting reconciliation purposes, etc.

## Claims

1. A system (10) for updating a server database (12) with travel data, the system comprising:
a first processing unit (18) provided in direct communication with a database of a server (12), the first processing unit (18) being arranged for receiving a remotely generated input data file (14) via a computer network, the input data file (14) comprising travel data (15) comprising
travel reservation data (15b) related to a travel reservation , and
travel fare data (15a) related to the travel reservation,
wherein the first processing unit (18) is arranged for processing the input data file (14) so as to extract the travel data (15) associated with predetermined fields of the server database (12) and accordingly update each of the server database fields with the corresponding travel data, wherein the database fields comprise travel reservation data fields for containing travel reservation values and travel fare data fields for containing travel fare values;
**characterised in that** the first processing unit (18) comprises a fare interpretation processing module (16) arranged for selecting, based on the travel reservation data (15b), at least one rule for processing the travel fare data (15a) from a database of rules (21), and based on the selected rule determine from the travel fare data (15a) the corresponding travel fare values associated with the fare data fields of the server database, which values are communicated to the first processing unit (18) where they are grouped together with the remaining travel data (15) for updating each of the server database fields.

2. The system (10) according to claim 1, wherein the database of rules (21) comprises a set of pre-defined type rules for handling travel fare data with standard interpretation requirements and a set of exception type rules for handling travel fare data exceptions.

3. The system (10) of according to claim 1 or 2, wherein the exception type rules are dynamically triggered by information (25, 26, 27, 28) contained in the travel reservation data (15b).

4. The system (10) according to claim 3, wherein the exception type rule to be applied to the travel fare data (15a) is selected from the database of rules (21) based on priority settings (22, 23, 24, 29) of the information (25, 26, 27, 28) contained in the travel reservation data (15b).

5. The system (10) according to claim 4, wherein the priority settings (22, 23, 24, 29) of information (25, 26, 27, 28) of the travel reservation data (15b) are defined through a graphical user interface (GUI) (20).

6. The system (10) according to any one of the preceding claims, wherein the fare interpretation processing module (16) comprises a fare interpretation engine (33) arranged for processing the travel fare data (15a) so as to determine the type of rule to be applied.

7. The system (10) according to claim 6, wherein the fare interpretation engine (33) is arranged for determining the type of rule to be applied to the travel fare data (15a) based on the ratio between predetermined travel fare amounts present in the travel fare data (15a) of the input data file (14).

8. The system (10) according to claim 7, wherein the input data file (14) comprises at least one travel fare amount.

9. The system (10) according to claim 7, wherein the input data file (14) comprises at most three travel fare amounts.

10. The system (10) according to any one of claims 6 to 9, wherein the fare interpretation processing module (16) comprises an exception type rule interpretation engine (30) for determining based on the travel reservation data (15b) whether an exception type rule applies to the travel fare data (15a).

11. The system (10) of according to claim 10, wherein the exception type rule interpretation engine (30) is arranged for issuing an alert signal (32) indicating that a new set of rules is required for processing the travel fare data (15a).

12. The system (10) according to any one of claims 6 to 11, wherein the fare interpretation processing module (16) comprises a calculation engine (31) arranged for determining from the travel fare data (15a) the corresponding travel fare values associated with the fare data fields of the server database (12) based on the rule selected by the fare interpretation engine (33) and the exception type rule interpretation engine (30).

13. The system (10) according to any one of the preceding claims, wherein the database of rules (21) is part of the fare interpretation processing module (16).

14. A method for updating a server database (12) with travel data, the method comprising the steps of :
receiving a remotely generated input data file (14) via a computer network by a first processing unit (18) provided in direct communication with a database of a server (12), the input data file (14) comprising travel data (14) comprising
travel reservation data (15b) related to a travel reservation , and
travel fare data (15a) related to the travel reservation,
processing the input data file by means of a first processing unit (18) so as to extract the travel data associated with predetermined fields of the server database (12), and
updating by means of the first processing unit (18) each of the server database fields with the corresponding travel data, wherein the database fields comprise travel reservation data fields for containing travel reservation values and travel fare data fields for containing travel fare values;
**characterised in that** the step of processing the input data file (14) comprises the step of selecting, based on the travel reservation data (15b), by means of a fare interpretation processing module (16), which is part of the first processing unit (18), at least one rule for processing the travel fare data (15a) from a database of rules (21), and based on the selected rule determine from the travel fare data (15a) the corresponding travel fare values associated with the fare data fields of the server database, which values are communicated to the first processing unit (18) where they are grouped together with the remaining travel data (15) for updating each of the server database fields.

15. The method of claim 14, wherein the step of processing the travel fare data (15a) based on the rule selected is performed by the fare interpretation processing module (16).
